# EUROPEAN PATENT SPECIFICATION

(11) **EP 2 942 520 B1**
(45) Date of publication and mention of the grant of the patent: **27.03.2019**
(21) Application number: 13868653.0
(22) Date of filing: 20.05.2013
(51) Int. Cl.: F03B 13/14, F03B 13/18, F03B 13/20

(54) **PRESSURISED-WATER INTEGRATED-TYPE ENERGY CONVERSION AND POWER-GENERATION SYSTEM COLLECTING MARINE WAVE ENERGY**
ENERGIEUMWANDLUNGS- UND STROMERZEUGUNGSSYSTEM MIT UNTER DRUCK STEHENDEM WASSER ZUM SAMMELN VON MEERESWELLENENERGIE
SYSTÈME CONVERTISSEUR D'ÉNERGIE ET GÉNÉRATEUR DE PUISSANCE DU TYPE INTÉGRÉ, À EAU MISE SOUS PRESSION, COLLECTANT DE L'ÉNERGIE HOULOMOTRICE

(30) Priority: 31.12.2012 CN 201210587840; 31.12.2012 CN 201220743152 U; 31.12.2012 CN 201220743235 U; 31.12.2012 CN 201220743146 U
(43) Date of publication of application: 11.11.2015
(73) Proprietor: Hu, Yaolin, Zhengzhou, Henan 450006 (CN)
(72) Inventor: Hu, Yaolin, Zhengzhou, Henan 450006 (CN)
(74) Representative: Intès, Didier Gérard André
(86) International application number: PCT/CN2013/075931
(87) International publication number: WO 2014/101369

(56) References cited:
- CN-A- 1 199 822
- CN-A- 102 011 680
- KR-A- 20070 115 104
- KR-A- 20070 115 105
- KR-A- 20100 114 875
- KR-A- 20100 120 350
- KR-A- 20100 120 352
- TW-A- 201 200 722
- US-A- 4 622 473
- US-A1- 2011 062 714
- US-A1- 2011 062 714

## Description

### Field of the Invention

The present invention relates to a technology of power-generation using marine wave energy, and specifically to pressurised water integrated energy conversion and power-generation system collecting marine wave energy.

### Description of the Related Art

People have started to use marine wave energy for power generation since the last century. Particularly due to the worldwide oil crisis that occurred in the 1970s, countries begun to shift their efforts to using local resources and finding appropriate and inexpensive energies. As of today, countries like Japan, the U.K., Ireland, Norway, Spain, Sweden, Denmark, India, the U.S. and Australia have built power generation installations for marine wave energy in the ocean. Overall, however, no fundamental breakthroughs have been achieved in terms of technical implementation of marine wave energy-power generation. Specifically, there are the following several aspects:
1. With respect to the current oceanic experiments conducted by countries, according to the literature: installations for power generation with marine wave energy that have been put in operation generally have drawbacks such as low energy collection efficiency, low energy collection sensitivity, low generation output, poor generation quality, high capital investment, high utilization cost and poor safety. Therefore, some experts believe that wave power generation technologies have not reached a level of general application.
2. The operation foundations of existing marine wave power generation installations can be roughly divided into two types: one type is a reinforced concrete foundation that is constructed at the seashore or on the seafloor as the operation platform for a marine wave power generation installation; the other type is a standard ship hull is used as the operation platform for a marine wave power generation installation. With respect to these two types of operation platforms, the former has drawbacks of high cost and immobility, while the latter not only has a high cost but is also unwieldy, also it has the drawback of poor resistance to the "strike" by marine waves.
3. All of existing marine wave power generation installations are subjected to the challenges of undulating and unstable marine waves. As a result, the quality of the generated power is relatively poor. One consequence of such a situation is the difficulty for the power thereof to enter the grid smoothly, which is a practical issue hard to be addressed. Another consequence of such a situation is that it not only directly affects the people's attitude toward power generated through safe utilization of marine waves, but also directly obstructs the vigorous effort by people to advance the development and utilization of power generation with marine wave energy.

An example of a wave power generation installation is shown in the document US 4 622 473.

### Summary of the Invention

There are four problems that the present invention needs to solve: 1. The construction of an operation platform for a marine wave power generation installation is a huge project and is unwieldy, and this type of operation platform has poor resistance to the "strike" by marine waves; 2. The marine wave power generation installation has low energy collection efficiency, low sensitivity, and low generation output; 3. It is impossible to effectively control the instability of "the secondary energy from collection and conversion of marine wave energy", and consequently the power quality of the power generated is poor; 4. The capital investment is high and the utilization cost is high.

According to the technical problems to be solved by the present invention, the objects of the present invention are:
1. To provide an operation platform for collecting marine wave energy and energy conversion and power generation that is naturally formed on oceans and lightweight, and has a strong resistance to the strike by marine waves;
2. To provide an installation that can collect marine wave energy with high efficiency and sensitivity;
3. To provide an installation of pressure mixing and regulation that can ensure the relative stability of "collected wave energy";
4. To provide a large energy conversion and power-generation system collecting marine wave energy, requires small capital investment, has a high generation output, good safety and low utilization cost.

To attain the above objects, the present invention employs the following technical solution:
A pressurised water integrated energy conversion and power-generation system collecting marine wave energy, which comprises an operation platform disposed in an ocean for collecting marine wave energy for energy conversion and power generation, and an energy conversion installation disposed on the operation platform, the energy conversion installation subjecting the collected wave energy to pressure mixing and then sending to a pressure regulator for pressure regulation; the energy after pressure regulation is supplied to a hydraulic power generation installation for power generation.

The operation platform for marine wave energy collection, energy conversion and power-generation comprises a cubic frame, the cubic frame comprises top crossbars and bottom crossbars, and sliding holes are formed on the bottom crossbars; the energy conversion installation is disposed between the top crossbars and bottom crossbars.

Auxiliary side floaters and counterweights are provided on two sides of the cubic frame.

The energy conversion installation comprises at least 24 small energy collection units mounted on the cubic frame, each small energy collection unit collects the potential energy of undulating marine waves and the kinetic energy from advancing marine waves, and the captured energy is sent collectively by a medium to a pressure mixer.

The small energy collection unit comprises a floater with a material density <0.91 g/cm³ and a sinker with a material density >7 g/cm³, the top portion of a plunger pump goes through the sinker and the floater to be connected to a flange, and the bottom portion of the plunger pump is slidably mounted inside the sliding holes of the cubic frame; the hollow plunger pump rod inside the plunger pump runs through the cubic frame and is open to a guide pipe, and the end of the guide pipe is open to the pressure mixer.

The top portion of the floater is a cylinder, and the bottom portion is an inverted round platform; the sinker is a cone; the bottom surface of the inverted round platform at the bottom portion of the floater is in contact with the top surface of the sinker, and the cylinder, the inverted round platform and the cone are disposed coaxially.

A check valve I is installed at the top of the hollow plunger pump rod, and a check valve II is installed at the lower end of the plunger pump body.

The pressure mixer is a sealed chamber, which is provided with a vertical pipe open to the guide pipe thereon and an output pipe open to the pressure regulator on the side thereof.

The pressure regulator comprises at least one sealed chamber, each sealed chamber is connected with a pipe output installation mouth on the top thereof, the pipe output installation mouth is open to the hydraulic power generation installation, and moreover, an input pipe mouth is provided at the lower end of the sealed chamber of the pressure regulator, and the input pipe mouth is connected with the output pipe of the pressure mixer; a hollow rubber air sac is provided inside the sealed chamber, and the hollow rubber air sac is filled with a pressurised gas therein.

A small hole is formed on the hollow rubber air sac.

With the above technical solution, the present invention has the following advantages:
(1) The energy conversion installation has an integration mode of a number of small units and floats above the sea surface, and floats up and down along with the marine waves. Because of the principle and structure, its safety and operability can be improved to the maximum degree possible. Moreover, its key components are designed to have the shapes of cylinder and cone, which can simultaneously ensure the capture of both the potential energy of undulating marine waves and the kinetic energy from advancing head-on marine waves.
(2) An anti-corrosion composite material, such as plastic steel, is used for the components of the energy conversion installation, and the medium used for energy conversion is seawater, a native material, which is consequently environmentally friendly, clean, and sustainable. Moreover, there is no worry about the resources, which can significantly reduce the operational investment for energy conversion. Furthermore, the energy conversion installation and the energy conversion operation platform supplement each other, the most common, least expensive, and most durable regular materials are used. As a result, its construction is more convenient and the cost is lower.
(3) The operation platform for energy conversion and power generation that collects marine wave energy is of a frame-type steel "cut-out" structure, which not only is light and convenient, but also can break the head-on or side waves; in addition, the product is currently designed to have a length of up to about 380 m. As the operation platform for energy conversion and power generation that collects marine wave energy is relatively narrow and long, it can achieve the stable effect that "a large ship can be resistant to storms and waves" when it is berthed down the wind. Moreover, it can minimize the blowing force from the wind in the front direction facing the ocean and the impact from the opposite horizontal waves, thereby making it fairly easy for its own berthing and normal operations; furthermore, due to the lack of a hard connection between the collection operation platform and the ocean floor and seashore, it can be berthed at any appropriate ocean areas as needed, and moreover, it can be conveniently moved to a haven under special circumstances, such as typhoons or tsunami; furthermore, as the operation platform for energy conversion and power generation that collects marine wave energy is provided with auxiliary side floaters and counterweights, it is secured in both relatively calm and relatively adverse maritime conditions, such that the entire power generation system can normally and effectively operate.
(4) To ensure the power generation quality, the present invention further performs two-level pressure regulation on the high pressure pipe seawater obtained by the pressurised water integrated marine wave energy conversion installation. The first level is referred to as pressure mixing, which makes different water pressures entering the pressure mixer to ultimately reach relative unification and stability when output from this stage. The second level is referred to as pressure regulation, which makes use of the volumetric difference of water and gases under varying pressures such that the pressurised water further achieves self and automatic stable regulation in the pressure regulator before being output to work.

### Brief Description of the Drawings

Fig. 1 illustrates the structure of the present invention.

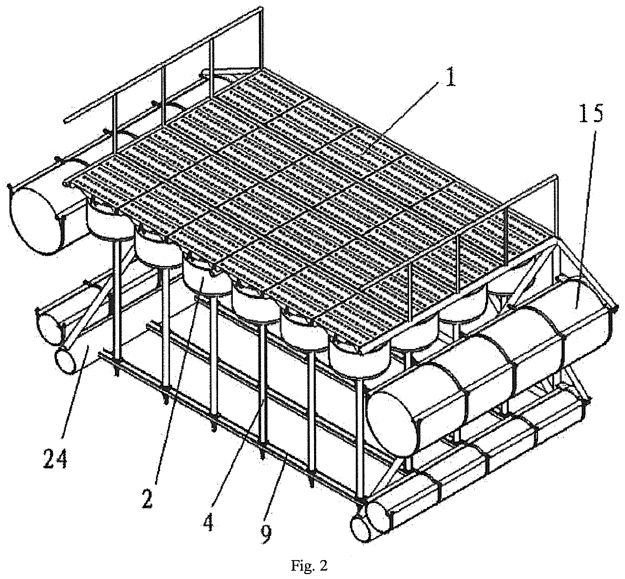

Fig. 2 illustrates the structure of the operation platform according to the present invention.

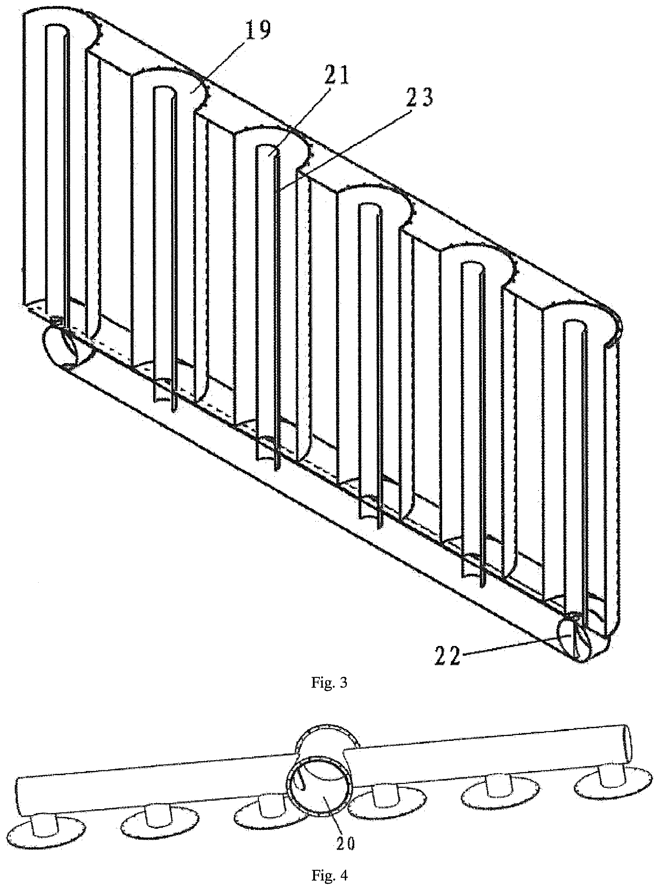

Fig. 3 illustrates the structure of the pressure regulator according to the present invention.
Fig. 4 illustrates the connection between the pressure regulator and the hydraulic power generation installation.

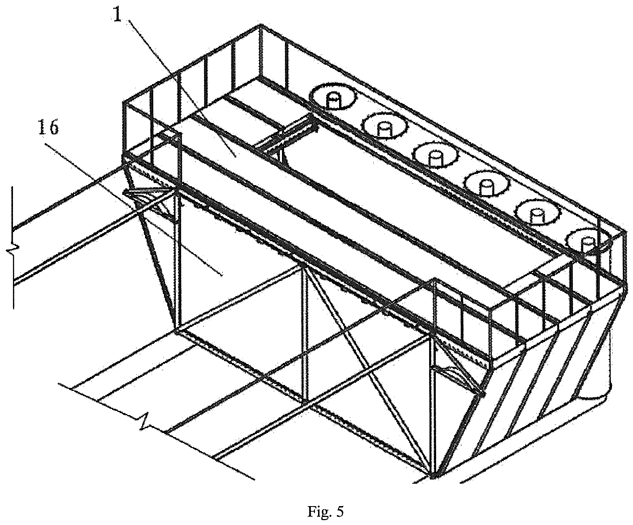

Fig. 5 illustrates the structure between the operation platform and the power generation operation room according to the present invention.

### Detailed Description of the Preferred Embodiments

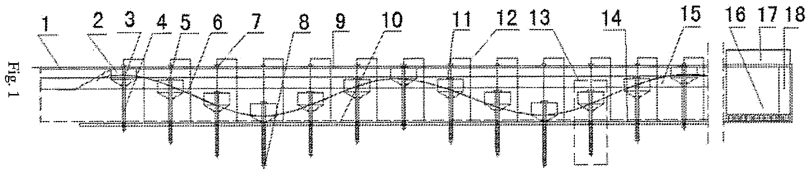

As shown in Fig. 1, a pressurised water integrated energy conversion and power-generation system collecting marine wave energy comprises an operation platform 1 disposed in an ocean for collecting marine wave energy for energy conversion and power generation, an energy conversion installation13 disposed on the operation platform 1, and a power generation operation room 16, wherein the power generation operation room 16 is disposed at one side of the operation platform 1; the energy conversion installation13 sends the collected wave energy (i.e. the high pressure pipe water) to a pressure mixer 14 for pressure mixing and then sends to a pressure regulator 18 for pressure regulation; the energy after pressure regulation is supplied to a hydraulic power generation installation 17 for power generation.

The operation platform 1 for marine wave energy collection, energy conversion and power-generation comprises a cubic frame, the cubic frame refers to a frame structure in which top crossbars 9 and bottom crossbars 10 form a cube, sliding holes are formed on the bottom crossbars 10, and a plunger pump 4 is slidably mounted inside the sliding holes; a plunger pump rod 5 of the energy conversion installation 13 is fixed by bolts between the top crossbars 9 and bottom crossbars 10. It should be noted that the cubic frame 2 may be merely a cubic frame made of a metal, plastic steel, or other materials. Since a plurality of energy conversion installations 13 are mounted on the cubic frame, and spaces are reserved among the energy conversion installations 13, the overall operation platform is referred to as a "cut-out body", and the weight of the cut-out body is dynamically placed on the energy conversion installations 13, respectively. According to sinusoidal wave advancing of marine waves and the principle of action and counteraction between objects, the operation platform 1 has a floating force that prevents it from sinking or tilting and is sufficient to enable it to smoothly float above the ocean, and as a result, it naturally forms an operation platform on the ocean that can provide basic and foundational support, can break 3-dimensional impact by the ocean water, and is relatively stable. To maximize the collection of wave energy even under small waves and to improve the sensitivity of energy collection thereof, in addition, auxiliary side floaters 15 and counterweights 24 are provided on two sides of the cubic frame. Under the common action of the floater 2, auxiliary side floaters 15 and counterweights 24, the energy conversion installations 13 can undulate along with the waves to the maximum degree possible, and therefore can collect wave energy to the maximal degree possible.

All of the plurality of energy conversion installations 13 are mounted between the framework structure of the operation platform 1 for marine wave energy collection, energy conversion and power generation, and each of them exists as a small energy collection unit; the potential energy of undulating marine waves and the kinetic energy from advancing marine waves captured by each small energy collection unit is then sent, in the form of high pressure pipe seawater, into a pressure mixer 14, wherein the small energy collection unit comprises a floater 2 with a material density <0.91 g/cm³ and a sinker 3 with a material density >7 g/cm³, such that the floater 2 is maintained at the top and the sinker 3 is maintained at the bottom. The top portion of the floater 2 is a cylinder, and the bottom portion is an inverted round platform; the sinker 3 is a cone; the bottom surface of the inverted round platform at the bottom portion of the floater 2 is in contact with the top surface of the sinker 3, and the cylinder, the inverted round platform and the cone are disposed coaxially. The top portion of the plunger pump 4 goes through the sinker 3 and the floater 2 to be connected to a flange 11 by bolts, and the bottom portion of the plunger pump 4 is slidably mounted inside the sliding holes of the cubic frame; the hollow plunger pump rod 5 inside the plunger pump 4 runs through the cubic frame and is open to a guide pipe 12, and the end of the guide pipe 12 is open to the pressure mixer 14. In addition, a check valve 17 is installed at the top of the hollow plunger pump rod 5, and a check valve 118 is installed at the lower end of the plunger pump body.

The floater 2 and the sinker 3 of each small energy collection unit in the energy conversion installation 13 form an energy receiving body of each unit. The energy receiving body of each unit can freely make reciprocating motion under the action of its own force of gravity, and the potential energy and kinetic energy of undulating and advancing marine waves, and at the same time, the reciprocating motion drives the plunger pump 4 to work in the same reciprocating manner. This process is specifically divided into two operational parts: the first part is an operational part of energy capture, which primarily consists of a floater 2 and a sinker 3. The former is made of a very light material with a density <0.91 g/cm³ and thelatteris made of a relatively heavy material with a density >7 g/cm³. Since it can displace a sufficiently large amount of water, withstand lateral impact from marine waves and break it to a partially upward pushing force, the first half circle of work by the floater 2 is that, first, it captures the potential energy of undulating marine waves and the kinetic energy from advancing marine waves. Under the co-action of these two energies, the floater 2 has to a certain upward movement. The latter half circle of work by the floater 2 is a certain downward movement under the action of forces of gravity of its own and the sinker 3. During the processes of these certain upward and downward movements, the potential energy and the kinetic energy of marine waves when acting on the floater 2, as well as the gravitational energy of self and the sinker 3when acting on the floater 2 or the attractive energy of the earth, are conveniently converted to the kinetic force for up and down movements or the pushing energy or pulling energy for linear forward and backward movements by the floater 2. According to the floater 2 of a current design, the maximal driving force or pushing force that can be obtained by a small unit thereof from marine waves is about 418 kg (all of the following data are revised according to the technical parameters of products that have been recently finalized). The second part is an operational part of water pressurization, which primarily consists of a plunger pump 4 or a water bag pump. It pumps seawater as driven by vertical reciprocating motion of the floater 2. The working period of the plunger pump 4 or the water bag pump is the same as the period of marine waves with the average thereof being 4 to 8 s. With respect to products of a current design, the maximal pressure of pumped pipe seawater can reach up to 19.9 kg/cm², and each working period of each plunger pump unit can capture a maximal amount of high pressure seawater of about 2.9 L.

The pressure mixer 14 is a sealed chamber, which is provided on the top thereof with a vertical pipe open to the guide pipe 12 and an output pipe open to the pressure regulator 18 on the side end thereof. The pressure regulator 18comprisesat least one sealed chamber 19, the top surface of each sealed chamber 19 is open to a pipe output installation mouth 20 via a pipe, the pipe output installation mouth 20 is open to the hydraulic power generation installation 17, and the hydraulic power generation installation 17 is a high water head hydraulic power station device. Moreover, an input pipe mouth 22 is provided at the lower end of each sealed chamber 19 of the pressure regulator 18, and the input pipe mouth 22 is connected with the output pipe of the pressure mixer 14; a hollow rubber air sac 21 is provided inside each sealed chamber 19, a small hole 23 is formed on the hollow rubber air sac 21, the hollow rubber air sac is filled with a pressurised gas therein, and high pressure pipe seawater is disposed between the hollow rubber air sac 21 and the sealed chamber 19. In such a way, when the pressure of the high pressure pipe seawater is too high, the hollow rubber air sac 21 can be compressed.

The specific implementation process of the present invention is as follows: first, steel and composite material are used to produce a frame structure similar to an aircraft carrier, which is placed into the ocean after operation installations, such as the auxiliary side floaters 15,the counterweights 24, the power generation operation room 16, the energy conversion installations 13, the pressure mixer 14, the pressure regulator 16, and the hydraulic power generation installation 17, have been installed, such that it itself naturally forms an operation platform 1 that can relatively steadily float above the ocean; second, based on this operation platform 1, the energy conversion installations 13 distributed thereon are used to convert the drawn seawater to high pressure pipe seawater, which is input into the pressure mixer 14, respectively, and then sent to the pressure regulator 18, such that they are gathered to become high pressure seawater at a flow rate and capable of working relatively steadily; lastly, the high pressure seawater ultimately output from the pressure regulator 18 that can work in a relatively steady manner carries out hydraulic power generation through the hydraulic power generation installation 17.

Pressure mixing and pressure regulation are mentioned above, wherein pressure mixing means that, when the pressure mixer 14 receives the pressurised water introduced by the hose of each energy conversion installation 13, the pressurised water itself is subjected to pressure mixing in the pressure mixer 14 in its own phase, and at the same time, the goal of automatically regulating the pressure of the first level pressurised water in the pressure mixer 14 is ultimately attained by mutually cancelling out their respective pressure, and wherein pressure regulation means that the pipe water pressure of the output water is automatically adjusted by means of the pressure volumetric difference of water and gas when the pressure varies.

According to the present invention, a "pressurised-water integrated energy conversion and power-generation system collecting marine wave energy" is currently designed, which has a length of about 380 m, width of 7 m, height of 3 m, and main body draft of 2 m. Its overall power output per unit according to the "theoretically conservative calculation" is about 1680 Kw. As a result, the daily power generation per power generation unit is more than 40,000 Kwh, and the monthly revenue (calculated according to 0.5 Yuan per Kwh and 30 days per month) is more than 600,000 Yuan. If 10 months per year are used, the annual revenue would be more than 6 million Yuan. A small power plant needs to at least install 10 sets of such a power generation installation in terms of scale. Obviously, its annual revenue could reach more than 6 million Yuan. The total weight of the currently designed single set of the marine wave power generation system is around 712 tons, wherein the counterweight concrete blocks are 384 tons. For the others, the cost per ton, including both material and manufacturing costs, is taken as 10,000 Yuan/ton, plus 1 million Yuan of other fees, the manufacturing cost per unit is around 5 million Yuan, while the total investment of 10sets of such a power generation installation is only around 50million Yuan. As a result, it can recover the investment in the same year, and moreover, a significant amount of revenue can be achieved in the same year.

## Claims

1. A pressurised water integrated energy conversion and power-generation system collecting marine wave energy, which comprises an operation platform (1) disposed in an ocean for collecting marine wave energy for energy conversion and power generation, and an energy conversion installation (13) disposed on the operation platform (1), the energy conversion installation (13) subjecting the collected wave energy to pressure mixing and then sending to a pressure regulator (18) for pressure regulation; the energy after pressure regulation is supplied to a hydraulic power generation installation (17) for power generation, the system being **characterized in that** the operation platform (1) comprises a cubic frame, the cubic frame comprises top crossbars (9) and bottom crossbars (10), and sliding holes are formed on the bottom crossbars (10);
the energy conversion installation (13) is disposed between the top crossbars (9) and bottom crossbars (10), and comprises at least 24 small energy collection units mounted on the cubic frame, each small energy collection unit collects the potential energy of undulating marine waves and the kinetic energy from advancing marine waves, and the captured energy is sent collectively by a medium to a pressure mixer (14),
each small energy collection unit comprises a floater (2) with a material density <0.91 g/cm3 and a sinker (3) with a material density >7 g/cm3, the top portion of a plunger pump (4) goes through the sinker (3) and the floater (2) to be connected to a flange (11), and the bottom portion of the plunger pump (4) is slidably mounted inside the sliding holes of the cubic frame; the hollow plunger pump rod (5) inside the plunger pump (4) runs through the cubic frame and is open to a guide pipe (12), and the end of the guide pipe (12) is open to the pressure mixer (14),
the pressure mixer (14) is a sealed chamber, which is provided with a vertical pipe open to the guide pipe (12) thereon and an output pipe open to the pressure regulator (18) on the side thereof the pressure regulator (18) comprises at least one sealed chamber (19), each sealed chamber (19) is connected with a pipe output installation mouth (20) on the top thereof, the pipe output installation mouth (20) is open to the hydraulic power generation installation (17), and moreover, an input pipe mouth (22) is provided at the lower end of the sealed chamber (19) of the pressure regulator (18), and the input pipe mouth (22) is connected with the output pipe of the pressure mixer (14); a hollow rubber air sac (21) is provided inside the sealed chamber (19), and the hollow rubber air sac (21) is filled with a pressurized gas therein.

2. The pressurised water integrated energy conversion and power-generation system collecting marine wave energy according to Claim 1, **characterized in that** auxiliary side floaters (15) and counterweights (24) are provided on two sides of the cubic frame.

3. The pressurised water integrated energy conversion and power-generation system collecting marine wave energy according to Claim 1,**characterized in that** the top portion of the floater (2) is a cylinder, and the bottom portion is an inverted round platform; the sinker (3) is a cone; the bottom surface of the inverted round platform at the bottom portion of the floater (2) is in contact with the top surface of the sinker (3), and the cylinder, the inverted round platform and the cone are disposed coaxially.

4. The pressurised water integrated energy conversion and power-generation system collecting marine wave energy according to Claim 1,**characterized in that** a check valve I (7) is installed at the top of the hollow plunger pump rod (5), and a check valve II (8) is installed at the lower end of the plunger pump body.

5. The pressurised water integrated energy conversion and power-generation system collecting marine wave energy according to Claim 1, **characterized in that** a small hole (23) is formed on the hollow rubber air sac (21).

## Patentansprüche

1. Integriertes Druckwasser-Energieumwandlungs- und Energieerzeugungssystem, das Meereswellenenergie auffängt, und das eine Betriebsplattform (1), die in einem Ozean angeordnet ist, um Meereswellenenergie zur Energieumwandlung und Energieerzeugung aufzufangen, und eine Energieumwandlungsinstallation (13), die auf der Betriebsplattform (1) angeordnet ist, umfasst, wobei die Energieumwandlungsinstallation (13) die aufgefangene Wellenenergie einer Druckmischung unterzieht und dann an einen Druckregler (18) zur Druckregelung sendet, wobei die Energie nach der Druckregelung in eine hydraulische Energieerzeugungsinstallation (17) zur Energieerzeugung eingespeist wird, wobei das System **dadurch gekennzeichnet ist, dass**:
die Betriebsplattform (1) einen kubischen Rahmen umfasst, wobei der kubische Rahmen obere Querelemente (9) und untere Querelemente (10) umfasst, und Gleitlöcher in den unteren Querelementen (10) ausgebildet sind,
die Energieumwandlungsinstallation (13) zwischen den oberen Querelementen (9) und den unteren Querelementen (10) angeordnet ist und mindestens 24 kleine Energieauffangeinheiten umfasst, die an dem kubischen Rahmen montiert sind, wobei jede kleine Energieauffangeinheit die potenzielle Energie von wogenden Meereswellen und die kinetische Energie von herannahenden Meereswellen auffängt, und die aufgefangene Energie zusammen durch ein Medium zu einem Druckmischer (14) gesendet wird,
jede kleine Energieauffangeinheit einen Schwimmer (2) mit einer Materialdichte < 0,91 g/cm³ und einen Sinker (3) mit einer Materialdichte > 7 g/cm³ umfasst, wobei der obere Abschnitt einer Kolbenpumpe (4) durch den Sinker (3) und den Schwimmer (2) verläuft, um mit einem Flansch (11) verbunden zu werden, und der untere Abschnitt der Kolbenpumpe (4) gleitfähig im Inneren der Gleitlöcher des kubischen Rahmens montiert ist, wobei die hohle Kolbenpumpenstange (5) im Inneren der Kolbenpumpe (4) durch den kubischen Rahmen hindurch verläuft und zu einem Führungsrohr (12) hin offen ist, und das Ende des Führungsrohres (12) zu dem Druckmischer (14) hin offen ist,
der Druckmischer (14) eine abgedichtete Kammer ist, die mit einem vertikalen Rohr versehen ist, das zu dem Führungsrohr (12) darauf hin offen ist, sowie mit einem Ausgangsrohr versehen ist, das zu dem Druckregler (18) auf seiner Seite hin offen ist, der Druckregler (18) mindestens eine abgedichtete Kammer (19) umfasst, wobei jede abgedichtete Kammer (19) mit einer Rohrausgangsinstallationsmündung (20) auf ihrer Oberseite verbunden ist, wobei die Rohrausgangsinstallationsmündung (20) zu der hydraulischen Energieerzeugungsinstallation (17) hin offen ist, und ferner eine Eingangsrohrmündung (22) am unteren Ende der abgedichteten Kammer (19) des Druckreglers (18) angeordnet ist, und die Eingangsrohrmündung (22) mit dem Ausgangsrohr des Druckmischers (14) verbunden ist, wobei ein hohler Gummiluftsack (21) im Inneren der abgedichteten Kammer (19) angeordnet ist und der hohle Gummiluftsack (21) mit einem Druckgas befüllt ist.

2. Integriertes Druckwasser-Energieumwandlungs- und Energieerzeugungssystem, das Meereswellenenergie auffängt, nach Anspruch 1, **dadurch gekennzeichnet, dass** seitliche Hilfsschwimmer (15) und Gegengewichte (24) auf zwei Seiten des kubischen Rahmens angeordnet sind.

3. Integriertes Druckwasser-Energieumwandlungs- und Energieerzeugungssystem, das Meereswellenenergie auffängt, nach Anspruch 1, **dadurch gekennzeichnet, dass** der obere Abschnitt des Schwimmers (2) ein Zylinder ist und der untere Abschnitt eine umgekehrte runde Plattform ist, wobei der Sinker (3) ein Konus ist, wobei die Bodenfläche der umgekehrten runden Plattform an dem unteren Abschnitt des Schwimmers (2) in Kontakt mit der Oberseite des Sinkers (3) steht, und der Zylinder, die umgekehrte runde Plattform und der Konus koaxial angeordnet sind.

4. Integriertes Druckwasser-Energieumwandlungs- und Energieerzeugungssystem, das Meereswellenenergie auffängt, nach Anspruch 1, **dadurch gekennzeichnet, dass** ein Rückschlagventil I (7) am oberen Ende der hohlen Kolbenpumpenstange (5) installiert ist und ein Rückschlagventil II (8) am unteren Ende des Kolbenpumpenkörpers installiert ist.

5. Integriertes Druckwasser-Energieumwandlungs- und Energieerzeugungssystem, das Meereswellenenergie auffängt, nach Anspruch 1, **dadurch gekennzeichnet, dass** ein kleines Loch (23) in dem hohlen Gummiluftsack (21) ausgebildet ist.

## Revendications

1. Système de conversion d'énergie et de génération de puissance intégré à eau sous pression collectant l'énergie des vagues, qui comprend une plateforme d'opération (1) disposée dans un océan pour collecter l'énergie des vagues pour la conversion d'énergie et la génération de puissance, et une installation de conversion d'énergie (13) disposée sur la plateforme d'opération (1), l'installation de conversion d'énergie (13) soumettant l'énergie des vagues collectée à un mélange sous pression puis l'envoyant à un régulateur de pression (18) pour la régulation de pression ; l'énergie, après la régulation de pression, est fournie à une installation de génération de puissance hydraulique (17) pour la génération de puissance, le système étant **caractérisé en ce que** la plateforme d'opération (1) comprend un bâti cubique, le bâti cubique comprend des traverses supérieures (9) et des traverses inférieures (10), et des trous coulissants sont formés sur les traverses inférieures (10) ;
l'installation de conversion d'énergie (13) est disposée entre les traverses supérieures (9) et les traverses inférieures (10) et comprend au moins 24 petites unités de collecte d'énergie montées sur le bâti cubique, chaque petite unité de collecte d'énergie collecte l'énergie potentielle des ondulations des vagues et l'énergie cinétique de l'avancement des vagues, et l'énergie capturée est envoyée collectivement par un milieu à un mélangeur de pression (14),
chaque petite unité de collecte d'énergie comprend un flotteur (2) avec une densité de matière < 0,91 g/cm³ et un plongeur (3) avec une densité de matière > 7g/cm³, la partie supérieure d'une pompe à piston plongeur (4) traverse le plongeur (3) et le flotteur (2) à raccorder à une bride (11), et la partie inférieure de la pompe à piston plongeur (4) est montée, de manière coulissante, à l'intérieur des trous coulissants du bâti cubique ; la tige creuse de pompe à piston plongeur (5) à l'intérieur de la pompe à piston plongeur (4) s'étend à travers le bâti cubique et est ouverte au niveau d'un tuyau de guidage (12) et l'extrémité du tuyau de guidage (12) s'ouvre sur le mélangeur de pression (14),
le mélangeur de pression (14) est une chambre étanche, qui est prévue avec un tuyau vertical ouvert sur le tuyau de guidage (12) et un tuyau de sortie ouvert sur le régulateur de pression (18) sur son côté, le régulateur de pression (18) comprend au moins une chambre étanche (19), chaque chambre étanche (19) est raccordée à une embouchure d'installation de sortie de tuyau (20) au niveau de sa partie supérieure, l'embouchure d'installation de sortie de tuyau (20) est ouverte sur l'installation de génération de puissance hydraulique (17), et de plus une embouchure de tuyau d'entrée (22) est prévue au niveau de l'extrémité inférieure de la chambre étanche (19) du régulateur de pression (18), et l'embouchure de tuyau d'entrée (22) est raccordée au tuyau de sortie du mélangeur de pression (14) ; un sac à air en caoutchouc creux (21) est prévu à l'intérieur de la chambre étanche (19) et le sac à air en caoutchouc creux (21) est rempli avec un gaz sous pression.

2. Système de conversion d'énergie et de génération de puissance intégré à eau sous pression collectant l'énergie des vagues selon la revendication 1, **caractérisé en ce que** des flotteurs latéraux auxiliaires (15) et des contrepoids (24) sont positionnés des deux côtés du bâti cubique.

3. Système de conversion d'énergie et de génération de puissance intégré à eau sous pression collectant l'énergie des vagues selon la revendication 1, **caractérisé en ce que** la partie supérieure du flotteur (2) est un cylindre et la partie inférieure est une plateforme ronde inversée ; le plongeur (3) est un cône ; la surface inférieure de la plateforme ronde inversée au niveau de la partie inférieure du flotteur (2) est en contact avec la surface supérieure du plongeur (3), et le cylindre, la plateforme ronde inversée et le cône sont disposés de manière coaxiale.

4. Système de conversion d'énergie et de génération de puissance intégré à eau sous pression collectant l'énergie des vagues selon la revendication 1, **caractérisé en ce qu'**une valve de non-retour I (7) est installée au sommet de la tige creuse de pompe à piston plongeur (5), et une valve de non-retour II (8) est installée au niveau de l'extrémité inférieure du corps de pompe à piston plongeur.

5. Système de conversion d'énergie et de génération de puissance intégré à eau sous pression collectant l'énergie des vagues selon la revendication 1, **caractérisé en ce qu'**un petit trou (23) est formé sur le sac à air en caoutchouc creux (21).
